# EUROPEAN PATENT APPLICATION

(11) **EP 4 064 215 A2**
(43) Date of publication of application: **28.09.2022**
(21) Application number: 22187501.6
(22) Date of filing: 28.07.2022
(51) Int. Cl.: G06V 10/80, G06V 40/16, G06V 40/40

(54) **METHOD AND APPARATUS FOR FACE ANTI-SPOOFING**

(30) Priority: 29.07.2021 CN 202110865025
(71) Applicant: BEIJING BAIDU NETCOM SCIENCE TECHNOLOGY CO., LTD., No. 10 Shangdi 10th Street Haidian District Beijing 100085 (CN)
(72) Inventor: WANG, Keyao, Beijing, 100085 (CN); LIU, Congyi, Beijing, 100085 (CN); ZHANG, Guosheng, Beijing, 100085 (CN); LU, Jie, Beijing, 100085 (CN); HUANG, Zebin, Beijing, 100085 (CN); ZOU, Zhaofan, Beijing, 100085 (CN); YUE, Haixiao, Beijing, 100085 (CN); FENG, Haocheng, Beijing, 100085 (CN)
(74) Representative: Maiwald Patent- und Rechtsanwaltsgesellschaft mbH

(57) **Abstract**

The disclosure provides a method and an apparatus for face anti-spoofing. The method includes: obtaining a source image to be detected containing a face; obtaining a detection image of each detection model based on the source image, in which the detection models include a main face anti-spoofing model and at least one auxiliary factor detection model, and the auxiliary factor detection model is configured to detect an anti-attack factor in face anti-spoofing; obtaining a first detection probability of the main face anti-spoofing model and a second detection probability of the auxiliary factor detection model; and determining a face anti-spoofing result based on the first detection probability and the second detection probability.

## Description

### TECHNICAL FIELD

The disclosure relates the technical field of image processing, in particular to the technical field of artificial intelligence (AI) such as computer vision and deep learning.

### BACKGROUND

Face anti-spoofing is one of the basic technologies in the field of face detection, which is applied to many scenarios such as security, attendance, finance, and access control. Face anti-spoofing is to determine whether an image is taken for a real person, which is the basis for ensuring security of a face recognition system.

### SUMMARY

Embodiments of the disclosure provide a method for face anti-spoofing, an apparatus for face anti-spoofing, an electronic device and a storage medium.

According to a first aspect, a method for face anti-spoofing is provided. The method includes: obtaining a source image to be detected containing a face; obtaining a detection image of each detection model based on the source image, in which the detection models include a main face anti-spoofing model and at least one auxiliary factor detection model, and the auxiliary factor detection model is configured to detect an anti-attack factor in face anti-spoofing; obtaining a first detection probability of the main face anti-spoofing model and a second detection probability of the auxiliary factor detection model; and determining a face anti-spoofing result based on the first detection probability and the second detection probability.

According to a second aspect, an apparatus for face anti-spoofing is provided. The apparatus includes: a first obtaining module, a second obtaining module, a third obtaining module and a determining module. The first obtaining module is configured to obtain a source image to be detected containing a face. The second obtaining module is configured to obtain a detection image of each detection model based on the source image. The detection models include a main face anti-spoofing model and at least one auxiliary factor detection model, and the auxiliary factor detection model is configured to detect an anti-attack factor in face anti-spoofing. The third obtaining module is configured to obtain a first detection probability of the main face anti-spoofing model and a second detection probability of the auxiliary factor detection model. The determining module is configured to determine a face anti-spoofing result based on the first detection probability and the second detection probability.

According to a third aspect, an electronic device is provided. The electronic device includes: at least one processor and a memory communicatively coupled to the at least one processor. The memory is stored with instructions executable by the at least one processor, and when the instructions are executed by the at least one processor, the at least one processor is enabled to execute the method according to the first aspect of the disclosure.

According to a fourth aspect, a non-transitory computer-readable storage medium storing computer instructions is provided. The computer instructions are configured to cause a computer to execute the method according to the first aspect of the disclosure.

According to a fifth aspect, a computer program product including computer programs is provided. When the computer programs are executed by a processor, the method according to the first aspect of the disclosure is executed.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of a method for face anti-spoofing according to an embodiment of the disclosure.
FIG. 2 is a flowchart of another method for face anti-spoofing according to an embodiment of the disclosure.
FIG. 3 is a schematic diagram of a T-shaped area image in a method for face anti-spoofing according to an embodiment of the disclosure.
FIG. 4 is a flowchart of another method for face anti-spoofing according to an embodiment of the disclosure.
FIG. 5 is a flowchart of another method for face anti-spoofing according to an embodiment of the disclosure.
FIG. 6 is a flowchart of another method for face anti-spoofing according to an embodiment of the disclosure.
FIG. 7 is a flowchart of another method for face anti-spoofing according to an embodiment of the disclosure.
FIG. 8 is a schematic diagram of an overall process of a method for face anti-spoofing according to an embodiment of the disclosure.
FIG. 9 is a schematic diagram of an apparatus for face anti-spoofing according to an embodiment of the disclosure.
FIG. 10 is a block diagram of an electronic device configured to implement the method for face anti-spoofing according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. For clarity and conciseness, descriptions of well-known functions and structures are omitted in the following description.

A method for face anti-spoofing, an apparatus for face anti-spoofing and an electronic device according to embodiments of the disclosure are described with reference to the accompanying drawings.

AI is a discipline that allows computers to simulate certain human thinking processes and intelligent behaviors (such as learning, reasoning, thinking and planning), which has both hardware-level technology and software-level technology. AI software technologies mainly include computer vision technology, speech recognition technology and machine learning(ML)/depth learning(DL), big data processing technology, knowledge graph technology and other major directions.

DL is a new research direction in the field of ML, which is introduced into ML to make it closer to the original goal, i.e., AI. DL is to learn the inherent laws and representation levels of sample data, and the information obtained during the learning process is of great help to the interpretation of data such as text, images and sounds. The ultimate goal of deep learning is to enable machines to have the ability to analyze and learn like human, and to recognize data such as words, images and sounds. DL is a complex ML algorithm that has achieved results in speech and image recognition far exceeding the prior art.

Computer vision is a science that studies how to make machines "see", it further refers to the use of machine vision such as cameras and computers instead of human eyes to identify, track, and measure targets, and further perform graphic processing, so that the processed image can become more suitable for the human eye to observe or for being transmitted to the instrument for detection after being processed by the computers. As a scientific discipline, computer vision studies related theories and technologies, and tries to build AI systems that can obtain "information" from images or multi-dimensional data. The information here refers to the information that can be used to help make a "decision". Since perception can be viewed as the extraction of information from sensory signals, computer vision can also be viewed as the science that studies how to make AI systems "perceive" images or multidimensional data.

Image processing technology is a technology that uses a computer to analyze an image to achieve the desired result, which is also called vision processing. Image processing generally refers to digital image processing. Digital image refers to a large two-dimensional array obtained by shooting with an industrial camera, a video camera, a scanner and other devices. The elements of the array are called pixels, and their values are called gray values. Image processing technology generally includes three parts: image compression, enhancement and restoration, and matching, description and recognition.

The method for face anti-spoofing according to embodiments of the disclosure may be performed by an electronic device. The electronic device may be a personal computer (PC), a tablet computer, a handheld computer or a mobile phone, which is not limited.

In an embodiment of the disclosure, the electronic device may be provided with a processing component, a storage component, and a driving component. Optionally, the driving component and the processing component may be set in an integrated manner. The storage component may store an operating system, an application program or other program modules. The processing component implements the method for face anti-spoofing according to embodiments of the disclosure by executing the application program stored in the storage component.

It should be noted that the method for face anti-spoofing according to the embodiments of the disclosure can be applied to an APP having a face recognition function, or a special video APP, which is not limited herein. In addition, the above APP having a face recognition function can be installed in an electronic device (e.g., mobile phones, tablet computers).

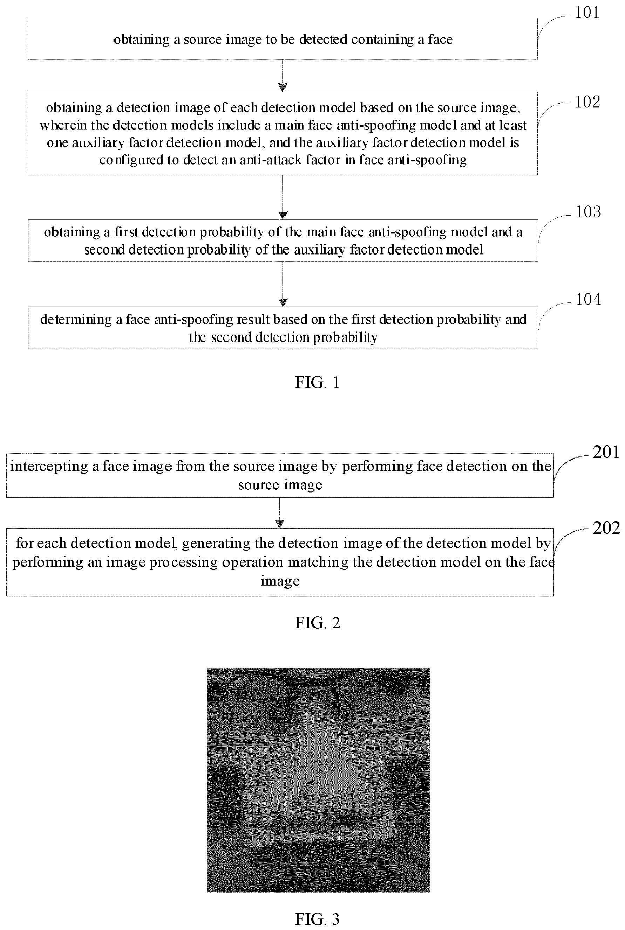

FIG. 1 is a flowchart of a method for face anti-spoofing according to an embodiment of the disclosure.

The method for face anti-spoofing according to an embodiment of the disclosure can also be performed by an apparatus for face anti-spoofing according to an embodiment of the disclosure, and the apparatus can be configured in an electronic device, to realize: obtaining a source image to be detected containing a face; obtaining a detection image of each detection model based on the source image, in which the detection models include a main face anti-spoofing model and at least one auxiliary factor detection model, and the auxiliary factor detection model is configured to detect an anti-attack factor in face anti-spoofing; obtaining a first detection probability of the main face anti-spoofing model and a second detection probability of the auxiliary factor detection model; and determining a face anti-spoofing result based on the first detection probability and the second detection probability. In the disclosure, since the main face anti-spoofing model and the at least one auxiliary factor detection model are set, face anti-spoofing can be performed in multiple dimensions on the face image, thereby improving the generalization and accuracy for face anti-spoofing.

In a possible implementation, the method for face anti-spoofing according to the embodiment of the disclosure may also be performed on a server. The server may be a cloud server, and the method for face anti-spoofing may be performed on the cloud.

As illustrated in FIG. 1, the method for face anti-spoofing includes the following steps.

In step 101, a source image to be detected containing a face is obtained.

It should be noted that the source image described in embodiments of the disclosure is a red-green-blue (RGB) image.

In an embodiment of the disclosure, there may be various methods for obtaining the source image to be detected containing a face. The source image containing a face can be obtained by taking pictures in real time with a collection device (for example, a peripheral camera), and the source image can be sent to an electronic device through communication connection. It should be noted that the communication connection may be at least one of a wireless network connection and a wired network connection.

In another possible implementation, it is also possible to select an image containing a face from an image library as the source image based on a user's selection operation, and input the source image into the electronic device.

In step 102, a detection image of each detection model is obtained based on the source image, in which the detection models include a main face anti-spoofing model and at least one auxiliary factor detection model, and the auxiliary factor detection model is configured to detect an anti-attack factor in face anti-spoofing.

It should be noted that the detection model in this embodiment may be trained in advance, and pre-stored in the storage space of the electronic device, for easy retrieval and application. The storage space is not limited to an entity-based storage space, for example, a hard disk, and the storage space may also be a storage space (cloud storage space) of a network hard disk connected to the electronic device.

Optionally, the training and generation of the detection model can be performed by a related training server, which may be a cloud server or a computer host. A communication connection is established between the training server and the electronic device that can perform the method for face anti-spoofing according to embodiments of the disclosure. The communication connection may be at least one of a wireless network connection and a wired network connection. The training server can send the trained detection model to the electronic device, so that the electronic device can call the detection model when needed, thereby greatly reducing the computing pressure of the electronic device.

In an embodiment of the disclosure, there may be various types of auxiliary factor detection models, for example, an auxiliary screen factor detection model, an auxiliary mask factor detection model, an auxiliary T-shaped factor detection model, an auxiliary facial organ factor detection model and the like. In the disclosure, the main face anti-spoofing model and the auxiliary factor detection models may be combined to generate a face anti-spoofing system, and one or more auxiliary factor detection models may be configured for the face anti-spoofing system according to the actual situation to facilitate face anti-spoofing.

Optionally, the detection images of respective detection models described in this embodiment may be different face area images. For example, the detection image corresponding to the auxiliary facial organ factor detection model may be a facial organ image, the detection image of the auxiliary T-shaped factor detection model may be a T-shaped area image containing an area composed of the extracted eyes and nose in the face image or the like.

Optionally, in an embodiment of the present disclosure, the source image containing the face may be input into a detection image generating model, to obtain the detection image of each detection model.

Optionally, after obtaining the source image containing the face, the electronic device can input the source image into the detection image generating model, so that the source image is processed (extracted) by the detection image generating model, and the detection image generating model outputs at least two detection images, that is, the detection images of the main face anti-spoofing model and the at least one auxiliary factor detection model.

It should be noted that the detection image generating model described in this embodiment may be trained in advance, and pre-stored in the storage space of the electronic device, for easy retrieval and application.

Optionally, the detection image can also be obtained by preprocessing the source image using a detection image generating tool (e.g., plugin).

In step 103, a first detection probability of the main face anti-spoofing model and a second detection probability of the auxiliary factor detection model are obtained.

In an embodiment of the disclosure, after obtaining the detection image of each detection model, the electronic device can input the corresponding detection images into the main face anti-spoofing model and the at least one auxiliary factor detection model respectively, so as to obtain the first detection probability and at least one second detection probability. It should be noted that the first detection probability is configured to represent the possibility that the main face anti-spoofing model detects a living face, and the second detection probability is configured to represent the possibility that the auxiliary factor detection model detects a living face.

It should be noted that the first detection probability and the second detection probability are both values greater than 0 and less than 1.

In step 104, a face anti-spoofing result is determined based on the first detection probability and the second detection probability.

In an embodiment of the disclosure, the first detection probability and the second detection probability may be input into a face anti-spoofing result algorithm for calculation, to generate a face anti-spoofing probability.

Further, the face anti-spoofing probability can be compared with a preset threshold. If the face anti-spoofing probability is greater than the threshold, it is considered that the input image is a living face image, and the corresponding face anti-spoofing result is passing the face anti-spoofing detection. If the face anti-spoofing probability is less than the threshold, the input image is considered to be a non-living face image, and the corresponding face anti-spoofing result is failing to pass the face anti-spoofing detection.

It should be noted that the threshold described in this embodiment is a value greater than 0 and less than 1, which can be set according to actual conditions.

Optionally, the face anti-spoofing result algorithm described in the above embodiment may be edited in advance and pre-stored in the storage space of the electronic device, for easy retrieval and application.

In an embodiment of the disclosure, the source image to be detected containing the face is obtained; the detection image of each detection model is obtained based on the source image, in which the detection models include the main face anti-spoofing model and at least one auxiliary factor detection model, and the auxiliary factor detection model is configured to detect an anti-attack factor in face anti-spoofing; the first detection probability of the main face anti-spoofing model and the second detection probability of the auxiliary factor detection model are obtained, and the face anti-spoofing result is determined based on the first detection probability and the second detection probability. Since at least one auxiliary factor detection model is adopted to cooperate with the main face anti-spoofing model, the dimension of face anti-spoofing can be increased, the performance of the face anti-spoofing method can be improved, and thus the accuracy and generalization of face anti-spoofing can be improved.

In the above embodiment, the detection image of each detection model is obtained based on the source image, which can be further understood in combination with FIG. 2. FIG. 2 is a flowchart of another method for face anti-spoofing according to an embodiment of the disclosure. As illustrated in FIG. 2, the method includes the following steps.

In step 201, a face image is intercepted from the source image by performing face detection on the source image.

In an embodiment of the disclosure, after obtaining the source image, the electronic device can input the source image into the face detection model to detect the position of the face in the source image, so as to intercept the face image from the source image.

It should be noted that the face detection model described in the above embodiment may be trained in advance and pre-stored in the storage space of the electronic device, for easy retrieval and application. The storage space is not limited to an entity-based storage space, for example, a hard disk, and the storage space may also be a storage space (cloud storage space) of a network hard disk connected to the electronic device.

Optionally, after the electronic device obtains the source image, the source image can be processed to obtain a plurality of facial key points, and through these key points, the positions of the facial organs and the face contour can be determined, and the face image can be intercepted based on the facial key points.

In step 202, for each detection model, the detection image of the detection model is generated by performing an image processing operation matching the detection model on the face image.

In an embodiment of the disclosure, the source image is firstly subjected to face detection to intercept the face image from the source image. Then for each detection model, the image processing operation that matches the detection model is performed on the face image, to generate the detection image of the detection model. It should be noted that the detection images of each detection model may be different.

In detail, in response to the detection model being the main face anti-spoofing model or the auxiliary screen factor detection model, the face image is amplified by a first set value as the detection image of the main face anti-spoofing model or the auxiliary screen factor detection model. The screen factor detection model is configured to detect presence of borders and/or reflections in a background of the detection image.

It should be noted that the auxiliary screen factor detection model is mainly aimed at electronic screen attacks. Electronic screen attack is a common attack, such as mobile phone photo attack, computer screen photo attack, handheld computer photo attack, and high-definition screen photo attack. Electronic screen attacks are plentiful and readily available, and most electronic screens have borders and/or reflections.

Optionally, the first set value of the main face anti-spoofing model or the auxiliary screen factor detection model may be 3, that is, the face image is amplified by 3 times, and the size of the amplified face image is adjusted to 224× 224 as the detection image of the main face anti-spoofing model or the auxiliary screen factor detection model.

Optionally, after the electronic device determines a face detection box, the face detection box can be amplified by 3 times and then the face image is intercepted, and the intercepted RGB face image can be subjected to image normalization processing. It should be noted that the image normalization processing is to perform normalization processing on each pixel in the image in turn. For example, the normalization processing method may be as follows: the pixel value of each pixel is subtracted by 128 and then divided by 256, to keep the pixel value of each pixel between [-0.5, 0.5]. The normalized image is subjected to random data enhancement processing as the input of the main face anti-proofing model and the auxiliary screen factor detection model.

Further, after receiving the input image, the main face anti-proofing model and the auxiliary screen factor detection model can use MobileNet (mobile terminal deep learning network) as the backbone (neural network application framework) of the convolutional neural network through the feature extraction network. Finally, image classification is performed through a fully-connected layer and a Softmax (normalization) layer, to complete face anti-spoofing classification of screen factors, thereby obtaining the corresponding first detection probability and at least one second detection probability.

In another possible implementation, in response to the detection model being the auxiliary mask factor detection model, the face image is amplified by a second set value as the detection image of the auxiliary mask factor detection model. The mask factor detection model is configured to detect whether the detection image is a clipped 2D (2-dimensional) mask, and the 2D mask includes a face used for attack.

It should be noted that the auxiliary mask factor detection model is mainly aimed at 2D mask attack. The 2D mask is made of real face-sized printing paper or clipped printed photos. The image is clipped along the hair line and the face contour to the size of a human face, and the area of the eyes, nose and mouth is clipped, so that when the real person wears the 2D mask, the facial organs can be exposed normally, and the body can move normally. The 2D mask attacks are also relatively common, and the 2D mask fit well with the face and is difficult to distinguish.

Optionally, in an embodiment of the disclosure, the second set value may be 1.5, that is, the face image is amplified by 1.5 times to obtain the detection image of the auxiliary mask factor detection model.

For example, after obtaining a face image including 72 facial key points, the electronic device can amplify the box by 1.5 times and then capture the face image, and further adjust the size to 224×224.

Further, after the auxiliary mask factor detection model receives the detection image, the electronic device can use MobileNet as the backbone of the convolutional neural network through the feature extraction network. The image classification is performed through the fully-connected layer and the Softmax layer, to complete face anti-spoofing classification of screen factors, so that the first detection probability and at least one second detection probability can be obtained.

In another possible implementation, in response to the detection model being the auxiliary T-shaped factor detection model, the T-shaped area image is generated based on the area containing the extracted eyes and nose in the face image, as the detection image of the auxiliary T-shaped factor detection model. The auxiliary T-shaped factor detection model is configured to detect whether the detection image is a clipped T-shaped mask, and the T-shaped mask only includes the eyes and nose.

It should be noted that the auxiliary T-shaped factor detection model is mainly aimed at T-shaped attacks. T-shaped attack is a new attack method. The specific attack method is to cut a piece of printing paper into a T-shaped mask with only the eyes and the nose, and stick it on the glasses to attack, which can break through the lock screen of many mobile phones that only use RGB silent-face-anti-spoofing.

Optionally, the T-shaped area image may be a clipped area centered on a key point of the center of the nose. As illustrated in FIG. 3, after the electronic device obtains the face image containing 72 facial key points, the nose area may be clipped with the key point of the center of the nose as center, and the obtained image can be adjusted to a size of 128x128 through the electronic device.

Further, after receiving the T-shaped area image, the auxiliary T-shaped factor detection model can use MobileNet as the backbone of the convolutional neural network through the feature extraction network. Finally, image classification is performed through the fully-connected layer and the Softmax layer to complete the face anti-spoofing classification of screen factors, thereby obtaining the first detection probability and at least one second detection probability.

In another possible implementation, in response to the detection model being the auxiliary facial organ factor detection model, the facial organ image is obtained from the face image as the detection image of the auxiliary facial organ factor detection model. The auxiliary facial organ factor detection model is configured to detect the detection image to determine whether it includes the facial organ.

It should be noted that the auxiliary facial organ factor detection model described in the above embodiment is to perform face anti-spoofing for facial organ attack, in which the facial organs may include glasses, mouth, nose and the like.

Optionally, the facial organ image can be obtained by positioning 72 facial key points. For example, obtaining the facial organ image of the eyes may be as follows. After the electronic device obtains the 72 facial key points, the area containing the eyes is intercepted, the left eye corner coordinate (xₐ, yₐ) and the right eye corner coordinate (x_{b}, y_{b}) are obtained according to the facial key points, the distance L₁ between the left eye corner and the right eye corner and the center point C₁ of the eye are obtained. Also, the affine transformation matrix M₁ is obtained. According to the affine transformation, the original image is affine-transformed to an image containing both eyes with a size of 120×40.

Further, after the auxiliary facial organ factor detection model receives the facial organ image again, the facial organ image is sent to the convolutional neural network composed of 5 convolution layers, 3 maximum pooling layers and 1 fully-connected layer for binary classification training, to complete the face anti-spoofing classification of the auxiliary facial organ factor detection model.

Thus, for different detection models, the detection image that matches the detection model can be generated, so that the detection models can perform face anti-spoofing in multiple dimensions with respect to different detection dimensions or partially different detection images, which greatly increases the accuracy and generalization of face anti-spoofing.

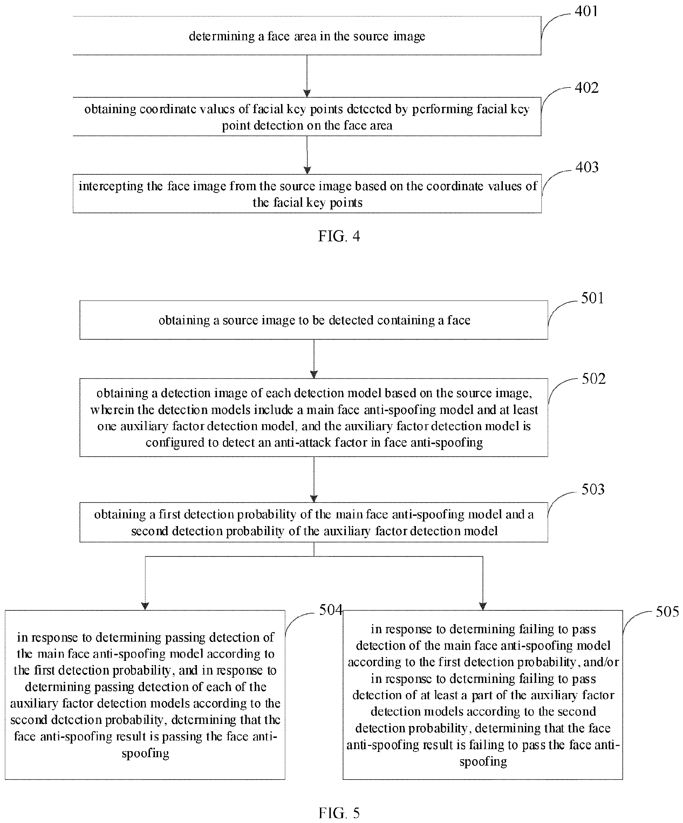

In the above embodiment, interception of the face image from the source image can be further understood in combination with FIG. 4. FIG. 4 is a flowchart of another method for face anti-spoofing according to an embodiment of the disclosure. As illustrated in FIG. 4, the method includes the following steps.

In step 401, a face area containing a face is determined in the source image.

In an embodiment of the disclosure, after obtaining the source image, the electronic device may input the source image into the face detection model for processing (positioning), to obtain an approximate position of the face area.

Optionally, the electronic device may also use face contour detection software (e.g., plug-in) for detection, to obtain the approximate position of the face contour area.

In step 402, facial key point detection is performed on the face area, and coordinate values of detected facial key points are obtained.

Optionally, the electronic device can perform facial key point detection on the detected face area through a facial key point detection model, to obtain N key points of the face and the corresponding coordinate values of the N key points. The facial key points may include left eye corner key points, right eye corner key points and nose contour key points, which need to be set according to the actual situation.

It should be noted that the coordinate value of the key point is a 2D coordinate value (x_{N}, y_{N}), where N is a positive integer. For example, 72 coordinates of facial key points, i.e., (x₁, y₁) (x₂, y₂) ... (x₇₂, y₇₂), can be obtained by inputting the detected face area into the facial key point detection model.

In step 403, the face image is intercepted from the source image based on the coordinate values of the facial key points.

In an embodiment of the disclosure, after obtaining the coordinates of facial key points, the electronic device can perform face alignment on a target face according to the coordinate values of facial key points, to obtain the face image. Specifically, the maximum values and the minimum values of x and y, i.e., xₘᵢₙ, xₘₐₓ, yₘᵢₙ and yₘₐₓ, are obtained according to the 72 coordinates of facial key points, and a box is determined according to the above values to intercept the face image. Further, in an embodiment of the disclosure, the maximum coordinate value and the minimum coordinate value of the facial key points are obtained, and the face detection box is determined from the source image according to the maximum coordinate value and the minimum coordinate value, and the face image is intercepted from the face detection box.

In detail, after the electronic device obtains the coordinate values of facial key points, it can obtain xₘᵢₙ, xₘₐₓ, yₘᵢₙ and yₘₐₓ according to the obtained coordinate values of facial key points, and the face box can be determined based on xₘᵢₙ, xₘₐₓ, yₘᵢₙ and yₘₐₓ. The face detection box is amplified by several times, and then the face image is intercepted from the face detection box.

For example, there may be 72 coordinates of facial key points, i.e., (*x*₁, *y*₁) (*x*₂, *y*₂)... (*x*₇₂, *y*₇₂), and xₘᵢₙ, xₘₐₓ, yₘᵢₙ and yₘₐₓ are obtained based on the 72 coordinates of facial key points. The face box can be determined according to xₘᵢₙ, xₘₐₓ, yₘᵢₙ and yₘₐₓ, and then the face box is amplified by 3 times to intercept the face image, and the face image is adjusted to a size of 224x224.

It should be noted that, the amplification described in the above embodiments can be set according to different models. Therefore, the face detection box can be accurately determined according to the coordinates of facial key points, and an accurate face image can be provided for subsequent operations.

In an embodiment of the disclosure, the face area is determined from the source image firstly, and the facial key point detection is performed on the face area, to obtain the coordinate values of the detected facial key points. Then, based on the detected coordinate values of the facial key points, the face image is intercepted from the source image. In this way, the face image can be accurately extracted from the source image, which provides a guarantee for generating the accurate detection image.

In the above embodiment, determining the face anti-spoofing result according to the first detection probability and the second detection probability can be further explained in combination with FIG. 5. FIG. 5 is a flowchart of another method for face anti-spoofing according to an embodiment of the disclosure. As illustrated in FIG. 5, the method further includes the following steps.

In step 501, a source image to be detected containing a face is obtained.

In step 502, a detection image of each detection model is obtained based on the source image, in which the detection models include a main face anti-spoofing model and at least one auxiliary factor detection model, and the auxiliary factor detection model is configured to detect an anti-attack factor in face anti-spoofing.

In step 503, a first detection probability of the main face anti-spoofing model and a second detection probability of the auxiliary factor detection model are obtained.

For the implementation of steps 501 to 503, reference may be made to the records of the relevant contents in the above embodiments, which will not be repeated here.

In step 504, in response to determining passing detection of main face anti-spoofing model according to the first detection probability, and in response to determining passing detection of each of the auxiliary factor detection models according to the second detection probability, it is determined that the face anti-spoofing result is passing the face anti-spoofing.

In step 505, in response to determining failing to pass detection of the main face anti-spoofing model according to the first detection probability, and/or in response to determining failing to pass detection of at least a part of the auxiliary factor detection models according to the second detection probability, it is determined that the face anti-spoofing result is failing to pass the face anti-spoofing.

In an embodiment of the disclosure, after obtaining the first detection probability and the second detection probability, the electronic device may compare the first detection probability with the first threshold and compare the second detection probability with the second threshold. If the first detection probability is greater than the first threshold, it is considered that the detection of the main face anti-spoofing model has been passed, and if the first detection probability is less than the first threshold, it is considered that the detection of the main face anti-spoofing model has not been passed. Similarly, if the second detection probability is greater than the second threshold, it is considered that the detection of the auxiliary factor detection model has been passed, and if the second detection probability is less than the second threshold, it is considered that the detection of the auxiliary factor detection model has not been passed.

Further, in order to prevent the newly added factor model from reducing the passing rate, the second threshold is generally much less than the first threshold. For example, the first threshold may be 0.9, and the second threshold may be 0.05.

That is, in order to ensure the accuracy of face anti-spoofing, and further improve the security of each application scenario based on face recognition, when the detection of the main face anti-spoofing model has been passed, and the detection of each auxiliary factor detection model has been passed, the electronic device determines the detection result as passing the face anti-spoofing.

Optionally, when the detection of the main face anti-spoofing model has not been passed, but the detection of the auxiliary factor detection model has been passed, it indicates that the source image is not an image that is collected in real time, but a forged attack image that can bypass the auxiliary model. In this case, in order to ensure the accuracy of the face anti-spoofing, the electronic device may directly determine the face anti-spoofing result as failing to pass the face anti-spoofing.

Optionally, when the detection of the main face anti-spoofing model has been passed, but the detection of one or more auxiliary factor detection models has not been passed, since the multiple auxiliary factor detection models are provided to ensure the safety of face anti-spoofing, if the detection of the auxiliary factor detection model has not been passed, it indicates that the source image is the attack image of the corresponding factor. In this case, in order to ensure the accuracy of face anti-spoofing, the electronic device can directly determine the face anti-spoofing result as failing to pass the face anti-spoofing.

Optionally, when the detection of the main face anti-spoofing model has not been passed and the detection of each auxiliary factor detection model has not been passed, the electronic device can directly determine the face anti-spoofing result as failing to pass the face anti-spoofing.

It should be noted that the method for face anti-spoofing of the disclosure can be applied to many scenarios such as security, attendance, finance, and access control, and is widely used in many current businesses. The solution of the disclosure can improve the detection dimension for face anti-spoofing, which greatly improves the performance of face anti-spoofing, and greatly improves the usage security and generalization.

Thus, it is possible to determine whether the detection of the main face anti-spoofing model and the auxiliary factor detection model has been passed based on the first detection probability and the second detection probability, so as to accurately determine the face anti-spoofing result.

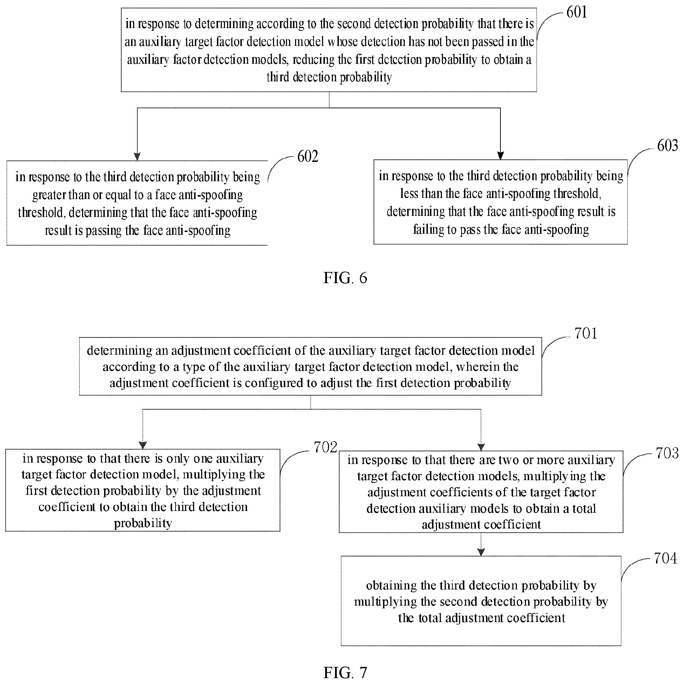

In the above embodiment, determining the face anti-spoofing result according to the first detection probability and the second detection probability can be further explained in combination with FIG. 6. FIG. 6 is a flowchart of another method for face anti-spoofing according to the embodiment of the disclosure. As illustrated in FIG. 6, the method further includes the following steps.

In step 601, in response to determining according to the second detection probability that there is an auxiliary target factor detection model whose detection has not been passed in the auxiliary factor detection models, the first detection probability is reduced to obtain a third detection probability.

It should be noted that, the first detection probability described in the above embodiments may be reduced, for example, multiplied by a reduction coefficient N, where 0<N<1, for example, N may be 0.9.

In detail, each time the electronic device detects an auxiliary target factor detection model whose detection has not been passed, the first detection probability is multiplied by N, to finally obtain the third detection probability.

In step 602, in response to the third detection probability being greater than or equal to a face anti-spoofing threshold, it is determined that the face anti-spoofing result is passing the face anti-spoofing.

In step 603, in response to the third detection probability being less than the face anti-spoofing threshold, it is determined that the face anti-spoofing result is failing to pass the face anti-spoofing.

It should be noted that, the face anti-spoofing threshold described in the above-mentioned embodiments is a value greater than 0 and less than 1. For example, the face anti-spoofing threshold may be 0.9.

In some embodiments of the disclosure, in response to determining according to the second detection probability that there is an auxiliary target factor detection model whose detection has not been passed in the auxiliary factor detection models, the first detection probability is reduced to obtain the third detection probability. In response to the third detection probability being greater than or equal to the face anti-spoofing threshold, the face anti-spoofing result is determined as passing the face anti-spoofing. In response to the third detection probability being less than the face anti-spoofing threshold, the face anti-spoofing result is determined as failing to pass the face anti-spoofing. Therefore, the detection result of the main face anti-spoofing model can be adjusted in multiple dimensions through the detection result of the auxiliary factor detection model, which greatly improves the accuracy of face anti-spoofing

In the above embodiments, reducing the second detection probability to obtain the third detection probability can be further explained in combination with FIG. 7. FIG. 7 is a flowchart of another method for face anti-spoofing according to an embodiment of the disclosure. As illustrated in FIG. 7, the method includes the following steps.

In step 701, an adjustment coefficient of the auxiliary target factor detection model is determined according to a type of the auxiliary target factor detection model, in which the adjustment coefficient is configured to adjust the first detection probability.

In embodiments of the disclosure, the adjustment coefficient includes a passing coefficient and a fail coefficient. When the detection image passes the detection of the auxiliary target factor detection model, the adjustment coefficient is the passing coefficient, and when the detection image does not pass the detection, the adjustment coefficient is the fail coefficient.

It should be noted that the above passing coefficient is 1, and the fail coefficient is a value greater than 0 and less than 1.

Optionally, the adjustment coefficients of different auxiliary factor detection models may be different, and the specific values are set according to the actual situation. For example, the adjustment coefficient of the auxiliary mask factor detection model may be 0.95, the adjustment coefficient of the auxiliary screen factor detection model may be 0.97, and the adjustment coefficient of the auxiliary T-shaped factor detection model may be 0.93.

In step 702, in response to that there is only one auxiliary target factor detection model, the first detection probability is multiplied by the adjustment coefficient to obtain the third detection probability.

In step 703, in response to that there are two or more auxiliary target factor detection models, the adjustment coefficients of the target auxiliary factor detection models are multiplied to obtain a total adjustment coefficient.

For example, the electronic device obtains that, the adjustment coefficient of the auxiliary target factor detection model 1 is *K₁*, the adjustment coefficient of the auxiliary target factor detection model 2 is *K₂*, and the adjustment coefficient of the auxiliary target factor detection model 3 is *K₃...* the adjustment coefficient of the auxiliary target factor detection model N is *K_{N}*, and the total adjustment coefficient is *K₁*^{∗} *K₂*^{∗} *K₃......* ^{∗}*K_{N}.*

In step 704, the third detection probability is obtained by multiplying the second detection probability by the total adjustment coefficient. The total adjustment coefficient obtained in the above embodiment can be multiplied with the first detection probability to obtain the third detection probability. The third detection probability may be *K₁*^{∗} *K₂*^{∗} *K₃......* ^{∗}*K_{N}*^{∗} the first detection probability.

In an embodiment of the disclosure, firstly, the adjustment coefficient of the auxiliary target factor detection model is determined according to the type of the auxiliary target factor detection model, in which the adjustment coefficient is configured to adjust the first detection probability. In response to that there is only one auxiliary target factor detection model, the first detection probability is multiplied by the adjustment coefficient to obtain the third detection probability. In response to that there are two or more auxiliary target factor detection models, the adjustment coefficients of the auxiliary target factor detection models are multiplied to obtain the total adjustment coefficient, and the third detection probability is obtained by multiplying the second detection probability by the total adjustment coefficient. Thus, the detection result of the main face anti-spoofing model can be adjusted according to the detection result of the auxiliary factor detection model, so as to obtain an accurate detection result.

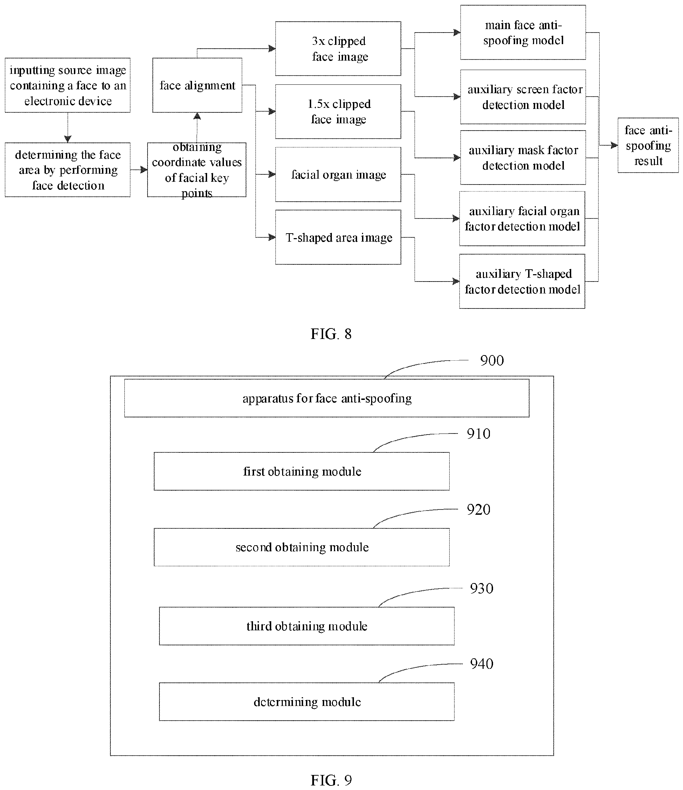

FIG. 8 is a schematic diagram illustrating an overall process of a method for face anti-spoofing according to an embodiment of the disclosure. As illustrated in FIG. 8, the source image containing the face is input into the electronic device, and the electronic device processes the source image by calling the face detection model, to obtain the face area. The electronic device then can detect the facial key points by calling the facial key point detection model, to obtain the coordinate values of the facial key point. Moreover, xₘᵢₙ, xₘₐₓ, yₘᵢₙ and yₘₐₓ are obtained according to the coordinates of facial key points. The face box is determined according to xₘᵢₙ, xₘₐₓ, yₘᵢₙ and yₘₐₓ to achieve face alignment. In response to the detection model being the main face anti-spoofing model or the auxiliary screen factor detection model, the first set value may be 3, that is, the face image is amplified by 3 times as the detection image of the main face anti-spoofing model or the auxiliary screen factor detection model. The first detection probability of the main face anti-spoofing model and the second detection probability of the auxiliary screen factor detection model are outputted. In response to the detection model being the auxiliary mask factor detection model, the second set value may be 1.5, i.e. the face image is amplified by 1.5 times and input into the auxiliary mask factor detection model, and the second detection probability is outputted from the auxiliary mask factor detection model. In response to the detection model being the auxiliary T-shaped factor detection model, the T-shaped area image is generated from the area containing the extracted eyes and nose in the face image as the detection image of the auxiliary T-shaped factor detection model, and the second detection probability of the T-shaped auxiliary factor detection model is output. In response to the detection model being the auxiliary facial organ factor detection model, the facial organ image is obtained from the face image as the input image of the auxiliary facial organ factor detection model, and the second detection probability of the auxiliary facial organ factor detection model is output. Finally, face anti-spoofing result is obtained based on the first detection probability, the second detection probability of the auxiliary mask factor detection model, the second detection probability of the auxiliary T-shaped factor detection model, the second detection probability of the auxiliary facial organ factor detection model and the second detection probability of the auxiliary screen factor detection model.

Corresponding to the method for face anti-spoofing according to the above embodiments, an embodiment of the disclosure further provides an apparatus for face anti-spoofing. The apparatus for face anti-spoofing according to embodiments of the disclosure corresponds to the method for face anti-spoofing according to the above embodiments, and thus the above implementations of the method for face anti-spoofing are also applicable to the apparatus for face anti-spoofing according to embodiments of the disclosure, which will not be described in detail in the following embodiments.

FIG. 9 is a schematic diagram of an apparatus for face anti-spoofing according to an embodiment of the disclosure.

As illustrated in FIG. 9, the apparatus 900 for face anti-spoofing includes: a first obtaining module 910, a second obtaining module 920, a third obtaining module 930 and a determining module 940.

The first obtaining module 910 is configured to obtain a source image to be detected containing a face.

The second obtaining module 920 is configured to obtain a detection image of each detection model based on the source image. The detection models include a main face anti-spoofing model and at least one auxiliary factor detection model, and the auxiliary factor detection model is configured to detect an anti-attack factor in face anti-spoofing.

The third obtaining module 930 is configured to obtain a first detection probability of the main face anti-spoofing model and a second detection probability of the auxiliary factor detection model.

The determining module 940 is configured to determine a face anti-spoofing result based on the first detection probability and the second detection probability.

In an embodiment of the disclosure, the second obtaining module 920 is further configured to: intercept a face image from the source image by performing face detection on the source image; and for each detection model, generate the detection image of the detection model by performing an image processing operation matching the detection model on the face image.

In an embodiment of the disclosure, the second obtaining module 920 is further configured to: determine a face area in the source image; detect facial key points in the face area, and obtain coordinate values of detected facial key points; and intercept the face image from the source image based on the coordinate values of the facial key points.

In an embodiment of the disclosure, the second obtaining module 920 is further configured to: obtain a maximum coordinate value and a minimum coordinate value of the facial key points; determine a face detection box based on the maximum coordinate value and the minimum coordinate value; and intercept the face image from the source image based on the face detection box.

In an embodiment of the disclosure, the determining module 940 is further configured to: in response to determining passing detection of the main face anti-spoofing model according to the first detection probability, and determining passing detection of each of the auxiliary factor detection models according to the second detection probability, determine that the face anti-spoofing result is passing the face anti-spoofing; and in response to determining failing to pass the detection of the main face anti-spoofing model according to the first detection probability, and/or in response to determining failing to pass the detection of at least a part of the auxiliary factor detection model according to the second detection probability, determine that the face anti-spoofing result is failing to pass the face anti-spoofing.

In an embodiment of the disclosure, the determining module 940 is further configured to: in response to determining according to the second detection probability that there is an auxiliary target factor detection model whose detection has not been passed in the auxiliary factor detection models, reduce the first detection probability to obtain a third detection probability; in response to the third detection probability being greater than or equal to a face anti-spoofing threshold, determine that the face anti-spoofing result is passing the face anti-spoofing; and in response to the third detection probability being less than the face anti-spoofing threshold, determine that the face anti-spoofing result is failing to pass the face anti-spoofing.

In an embodiment of the disclosure, the determining module 940 is further configured to: determine an adjustment coefficient of the auxiliary target factor detection model according to a type of the target auxiliary factor detection model, wherein the adjustment coefficient is configured to adjust the first detection probability; in response to that there is only one auxiliary target factor detection model, multiply the first detection probability by the adjustment coefficient to obtain the third detection probability; or, in response to that there are two or more auxiliary target factor detection models, multiply the adjustment coefficients of the auxiliary target factor detection models to obtain a total adjustment coefficient, and obtain the third detection probability by multiplying the second detection probability by the total adjustment coefficient.

It should be noted that, in the technical solution of the disclosure, the acquisition, storage, and application of the user's personal information involved all comply with the provisions of relevant laws and regulations, and do not violate public order and good customs.

According to embodiments of the disclosure, the disclosure also provides an electronic device, a readable storage medium and a computer program product.

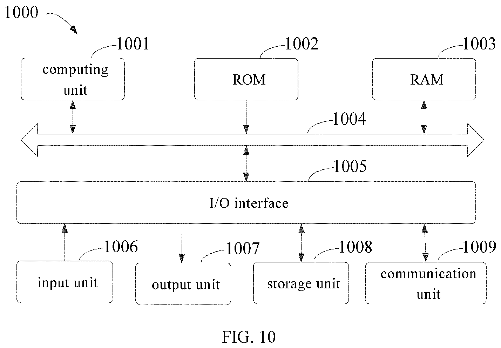

FIG. 10 is a block diagram of an example electronic device 1000 used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 10, the device 1000 includes a computing unit 1001 performing various appropriate actions and processes based on computer programs stored in a read-only memory (ROM) 1002 or computer programs loaded from the storage unit 1008 to a random access memory (RAM) 1003. In the RAM 1003, various programs and data required for the operation of the device 1000 are stored. The computing unit 1001, the ROM 1002, and the RAM 1003 are connected to each other through a bus 1004. An input/output (I/O) interface 1005 is also connected to the bus 1004.

Components in the device 1000 are connected to the I/O interface 1005, including: an inputting unit 1006, such as a keyboard, a mouse; an outputting unit 1007, such as various types of displays, speakers; a storage unit 1008, such as a disk, an optical disk; and a communication unit 1009, such as network cards, modems, and wireless communication transceivers. The communication unit 1009 allows the device 1000 to exchange information/data with other devices through a computer network such as the Internet and/or various telecommunication networks.

The computing unit 1001 may be various general-purpose and/or dedicated processing components with processing and computing capabilities. Some examples of computing unit 1001 include, but are not limited to, a central processing unit (CPU), a graphics processing unit (GPU), various dedicated AI computing chips, various computing units that run ML model algorithms, and a digital signal processor (DSP), and any appropriate processor, controller and microcontroller. The computing unit 1001 executes the various methods and processes described above, such as the method for face anti-spoofing. For example, in some embodiments, the method for face anti-spoofing may be implemented as computer software programs, which are tangibly contained in a machine-readable medium, such as the storage unit 1008. In some embodiments, part or all of the computer program may be loaded and/or installed on the device 1000 via the ROM 1002 and/or the communication unit 1009. When the computer program is loaded on the RAM 1003 and executed by the computing unit 1001, one or more steps of the method for face anti-spoofing described above may be executed. Alternatively, in other embodiments, the computing unit 1001 may be configured to perform the method in any other suitable manner (for example, by means of firmware).

Various implementations of the systems and techniques described herein above may be implemented in a digital electronic circuit system, an integrated circuit system, a field programmable gate arrays (FPGA), an application specific integrated circuit (ASIC), an application specific standard products (ASSP), a system on chip (SOC), a load programmable logic device (CPLD), a computer hardware, a firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and the block-chain network.

The computer system may include a client and a server. The client and server are generally remote from each other and interacting through a communication network. The client-server relation is generated by computer programs running on the respective computers and having a client-server relation with each other. The server may be a cloud server, a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

## Claims

1. A method for face anti-spoofing, comprising:
obtaining a source image to be detected containing a face (101; 501);
obtaining a detection image of each of detection models based on the source image, wherein the detection models comprise a main face anti-spoofing model and at least one auxiliary factor detection model, and the auxiliary factor detection model is configured to detect an anti-attack factor in face anti-spoofing (102; 502);
obtaining a first detection probability of the main face anti-spoofing model and a second detection probability of the auxiliary factor detection model (103; 503); and
determining a face anti-spoofing result based on the first detection probability and the second detection probability (104).

2. The method of claim 1, wherein obtaining the detection image of each of the detection models based on the source image (102; 502), comprises:
intercepting a face image from the source image by performing face detection on the source image (201); and
for each of the detection models, generating the detection image of the detection model by performing an image processing operation matching the detection model on the face image (202).

3. The method of claim 2, wherein intercepting the face image from the source image by performing face detection on the source image (201) comprises:
determining a face area in the source image (401);
obtaining coordinate values of facial key points detected by performing facial key point detection on the face area (402); and
intercepting the face image from the source image based on the coordinate values of the facial key points (403).

4. The method of claim 3, wherein intercepting the face image from the source image based on the coordinate values of the facial key points (403) comprises:
obtaining a maximum coordinate value and a minimum coordinate value of the facial key points;
determining a face detection box based on the maximum coordinate value and the minimum coordinate value; and
intercepting the face image from the source image based on the face detection box.

5. The method of any one of claims 1-4, wherein determining the face anti-spoofing result based on the first detection probability and the second detection probability (104), comprises:
in response to determining passing detection of the main face anti-spoofing model according to the first detection probability, and in response to determining passing detection of each of the auxiliary factor detection model according to the second detection probability, determining that the face anti-spoofing result is passing the face anti-spoofing (504); and
in response to determining failing to pass detection of the main face anti-spoofing model according to the first detection probability, and/or in response to determining failing to pass detection of at least a part of the auxiliary factor detection models according to the second detection probability, determining that the face anti-spoofing result is failing to pass the face anti-spoofing (505).

6. The method of any one of claims 1-4, wherein determining the face anti-spoofing result based on the first detection probability and the second detection probability (104) comprises:
in response to determining according to the second detection probability that there is an auxiliary target factor detection model whose detection has not been passed in the auxiliary factor detection models, reducing the first detection probability to obtain a third detection probability (601);
in response to the third detection probability being greater than or equal to a face anti-spoofing threshold, determining that the face anti-spoofing result is passing the face anti-spoofing (602); and
in response to the third detection probability being less than the face anti-spoofing threshold, determining that the face anti-spoofing result is failing to pass the face anti-spoofing (603).

7. The method of claim 6, wherein reducing the second detection probability to obtain the third detection probability (601) comprises:
determining an adjustment coefficient of the auxiliary target factor detection model according to a type of the auxiliary target factor detection model, wherein the adjustment coefficient is configured to adjust the first detection probability (701);
in response to that there is only one auxiliary target factor detection model, multiplying the first detection probability by the adjustment coefficient to obtain the third detection probability (702); or,
in response to that there are two or more auxiliary target factor detection models, multiplying the adjustment coefficients of the auxiliary target factor detection models to obtain a total adjustment coefficient (703); and
obtaining the third detection probability by multiplying the second detection probability by the total adjustment coefficient (704).

8. The method of claim 2, wherein generating the detection image of the detection model by performing the image processing operation matching the detection model on the face image (202) comprises:
in response to the detection model being the main face anti-spoofing model or an auxiliary screen factor detection model, amplifying the face image by a first set value as the detection image of the main face anti-spoofing model or the auxiliary screen factor detection model, wherein the auxiliary screen factor detection model is configured to detect whether there is a border and/or reflection in a background of the detection image; or,
in response to the detection model being an auxiliary mask factor detection model, amplifying the face image by a second set value as a detection image of the auxiliary mask factor detection model, wherein the auxiliary mask factor detection model is configured to detect whether the detection image is a clipped 2D mask, and the 2D mask comprises a face used for attack; or,
in response to the detection model being an auxiliary T-shaped factor detection model, generating a T-shaped area image from an area containing eyes and a nose in the face image as the detection image of the auxiliary T-shaped factor detection model, wherein the auxiliary T-shaped factor detection model is configured to detect whether the detection image is a clipped T-shaped mask, and the T-shaped mask only contains eyes and nose; or,
in response to the detection model being an auxiliary facial organ factor detection model, generating a facial organ image from the face image as the detection image of the auxiliary facial organ factor detection model, wherein the auxiliary facial organ factor detection model is configured to detect the detection image to determine whether the detection image contains a facial organ.

9. An apparatus (900) for face anti-spoofing, comprising:
a first obtaining module (910), configured to obtain a source image to be detected containing a face;
a second obtaining module (920), configured to obtain a detection image of each of detection models based on the source image, wherein the detection models comprise a main face anti-spoofing model and at least one auxiliary factor detection model, and the auxiliary factor detection model is configured to detect an anti-attack factor in face anti-spoofing;
a third obtaining module (930), configured to obtain a first detection probability of the main face anti-spoofing model and a second detection probability of the auxiliary factor detection model; and
a determining module (940), configured to determine a face anti-spoofing result based on the first detection probability and the second detection probability.

10. The apparatus (900) of claim 9, wherein the second obtaining module (920) is further configured to:
intercept a face image from the source image by performing face detection on the source image; and
for each detection model, generate the detection image of the detection model by performing an image processing operation matching the detection model on the face image.

11. The apparatus (900) of claim 10, wherein the second obtaining module (920) is configured to:
determine a face area in the source image;
obtain coordinate values of facial key points detected by performing facial key point detection on the face area; and
intercept the face image from the source image based on the coordinate values of the facial key points.

12. The apparatus (900) of claim 11, wherein the second obtaining module (920) is further configured to:
obtain a maximum coordinate value and a minimum coordinate value of the facial key points;
determine a face detection box based on the maximum coordinate value and the minimum coordinate value; and
intercept the face image from the source image based on the face detection box.

13. The apparatus (900) of any one of claims 9-12, wherein the determining module (920) is further configured to:
in response to determining passing detection of the main face anti-spoofing model according to the first detection probability, and determining passing detection of each of the auxiliary factor detection models according to the second detection probability, determine that the face anti-spoofing result is passing the face anti-spoofing; and
in response to determining failing to pass detection of the main face anti-spoofing model according to the first detection probability, and/or in response to determining failing to pass detection of at least a part of the auxiliary factor detection models according to the second detection probability, determine that the face anti-spoofing result is failing to pass the face anti-spoofing.

14. An electronic device, comprising:
at least one processor; and
a memory communicatively coupled to the at least one processor; wherein,
the memory is stored with instructions executable by the at least one processor, when the instructions are executed by the at least one processor, the at least one processor is enabled to implement the method for face anti-spoofing according to any one of claims 1-8.

15. A non-transitory computer-readable storage medium stored with computer instructions, wherein the computer instructions are configured to cause a computer to implement the method for face anti-spoofing according to any one of claims 1-8.
